# EUROPÄISCHE PATENTSCHRIFT

(11) **EP 1 698 797 B1**
(45) Veröffentlichungstag und Bekanntmachung des Hinweises auf die Patenterteilung: **03.08.2011**
(21) Anmeldenummer: 06009114.7
(22) Anmeldetag: 05.06.2004
(51) Int. Cl.: F16F 9/50, F16F 9/504, F16F 9/58, F16F 9/512, F16F 9/342

(54) **Schwingungsdämpfer mit amplitudenabhängiger Dämpfung**
Vibration damper with amplitude-dependent damping
Amortisseur de vibrations avec amortissement dépendant de l'amplitude

(30) Priorität: 08.07.2003 DE 10330937; 04.11.2003 DE 10351353
(43) Veröffentlichungstag der Anmeldung: 06.09.2006
(62) Teilanmeldung aus: 04013317.5
(73) Patentinhaber: ThyssenKrupp Bilstein Suspension GmbH, 58256 Ennepetal (DE)
(72) Erfinder: Hartig, Ulrich, Dipl.-Ing., 54429 Mandern (DE); Götz, Ole, Dipl.-Ing., 38112 Braunschweig (DE); Nevoigt, Andreas, Dr.-Ing., 58313 Herdecke (DE); Feist, Dirk, 44627 Herne (DE); Weimann, Claus, Dipl.-Ing., 58300 Wetter (DE); Lauer, Elmar, Dipl.-Ing., 66709 Weiskirchen (DE); Schmidt, Markus, Dipl.-Ing., 54294 Trier (DE); Kaup, Andreas, Dipl.-Ing., 66620 Nonnweiler (DE); Eisenring, Tina, 54429 Mandern (DE); Körner, Joachim, 54314 Paschel (DE); Schreiner, Alfons, 54413 Gusenburg (DE); Jost, Thomas, 54429 Schillingen (DE); Burböck, Walter, 70188 Stuttgart (DE); Wilhelm, Ralf, Dipl.-Ing., 75394 Oberreichenbach (DE)
(74) Vertreter: Adams, Steffen

(56) Entgegenhaltungen:
- EP-A- 1 152 166
- DE-U1- 7 739 537

## Beschreibung

Die Erfindung betrifft einen Schwingungsdämpfer mit amplitudenabhängiger Dämpfung mit einem hydraulisch parallel zum Schwingungsdämpfer angebundenen zylindrischen Ausgleichsraum nach dem Oberbegriff des Anspruchs 1.

Um zu erreichen, dass Schwingungsdämpfer, insbesondere zum Dämpfen von Fahrzeugrädern, bei Schwingungen mit hoher Frequenz und geringer Amplitude die Dämpfungswirkung absenken, sind Schwingungsdämpfer mit amplitudenabhängiger Dämpfung nach dem Oberbegriff des Anspruchs 1 entwickelt worden. Ein derartiger Schwingungsdämpfer ist in der EP 1 152 166 A1 beschrieben. Bei diesem Schwingungsdämpfer ist hydraulisch parallel ein zylindrischer Ausgleichsraum angebunden, der durch einen axial verschiebbaren Trennkolben aufgeteilt ist. Der Trennkolben ist an wenigstens einer Deckelfläche mit einem elastisch nachgiebig ausgebildeten Puffer ausgebildet. Nachteilig ist bei dem hier beschriebenen Schwingungsdämpfer dieser elastische Puffer als in einer Nut liegender O-Ring ausgebildet. Seine Pufferwirkung ist sehr hart, sodass das Anschlagen des Trennkolbens an den Boden des zylindrischen Ausgleichsraums zu Schlägen führt, die zumindest hörbar und im Extremfall auch spürbar im Fahrzeug wahrnehmbar sind. Weiterhin führt nachteilig diese schlagartige Beanspruchung der Ringe zu einem schnellen Verschleiß. Zusätzlich bewirkt ein harter Puffer einen schnellen Kraftübergang zwischen weicher und harter Dämpferkennlinie. Dies kann im Umschaltpunkt zu unzulässig hohen Beschleunigungen an der Kolbenstange führen, was im Auto als störendes Geräusch oder als unharmonisches Dämpfungsverhalten wahrgenommen werden kann.

Der Erfindung liegt die Aufgabe zugrunde, den gattungsgemäßen Schwingungsdämpfer derartig weiterzubilden, dass ein weicherer Anlauf des Trennkolbens an seine Endposition im Ausgleichsraum erreicht wird.

Diese Aufgabe wird durch die Merkmale des Anspruchs 1 gelöst.

Vorteilhafte Aus- und Weiterbildungen des Erfindungsgegenstandes sind in den Unteransprüchen beschrieben.

Bei der Ausbildung gemäß Anspruch 1 wird ein erfindungsgemäßer Lösungsweg zur endseitigen Dämpfung des Trennkolbens aufgezeigt. Durch die Ausbildung des Trennkolbens mit einem zentralen Dorn, der in der Endlage in die zentrale Hydraulikzulaufbohrung hineinfährt, wird eine hydraulische Dämpfung erreicht, ohne dass es zum Anschlagen des Trennkolbens an den zugehörigen Boden des Ausgleichsraums kommt. Durch diese Ausbildung wird ein weicher Anlauf erreicht. Durch die Formgebung der Verjüngung des Dorns zu seinem Ende hin kann die vorgesehene Dämpfung den jeweiligen Erfordernissen angepasst werden.

Ein Ausführungsbeispiel der Erfindung ist in der Zeichnung dargestellt und wird im Folgenden näher beschrieben. Es zeigen
- Fig. 1: einen Schnitt durch einen nicht erfindungsgemäßen Schwingungsdämpfer im Bereich des Arbeitskolbens,
- Fig. 2: eine erfindungsgemäße Ausbildung des Trennkolbens im Zusammenwirken mit dem zugehörigen Ausgleichsraum,
- Fig. 3 und 4: Ausschnitte entsprechend Fig. 1 mit alternativen Ausbildungen des Gehäuses des Ausgleichsraumes,
- Fig. 5: ein Kraft-Weg-Diagramm für den Trennkolbenanlauf und

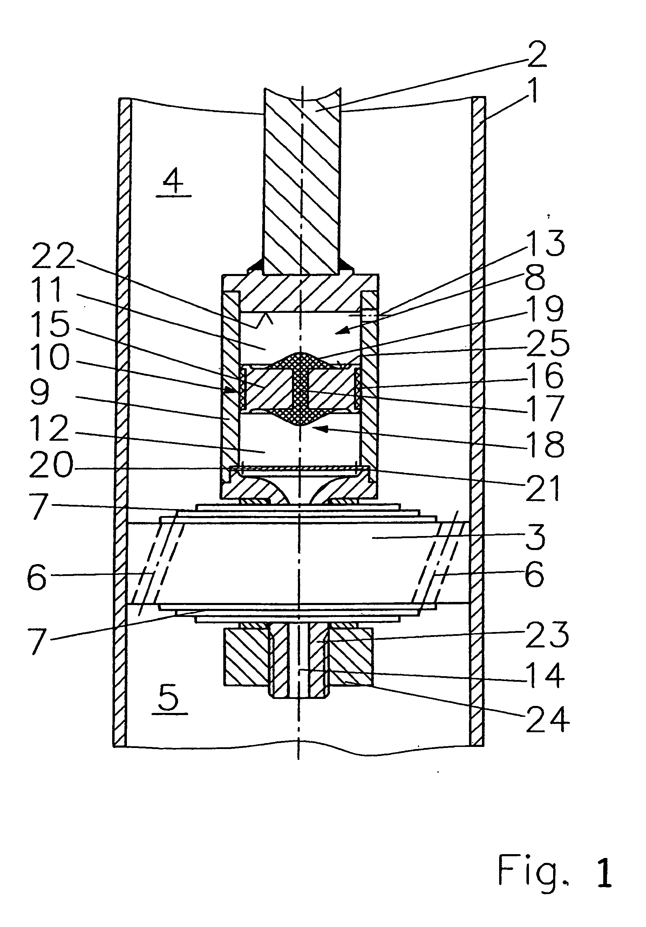

Fig. 1 zeigt einen Schnitt durch einen nicht zur vorliegenden Erfindung gehörenden Stoßdämpfer im Bereich des Dämpferkolbens. Hierbei handelt es sich um einen Einrohrstoßdämpfer. Ein oben und unten verschlossenes Dämpferrohr 1 ist mit Dämpfungsflüssigkeit gefüllt. Einseitig abgedichtet taucht eine Kolbenstange 2 oszillierend in das Dämpferrohr 1 ein. Dämpferrohr 1 und Kolbenstange 2 sind mit nicht dargestellten Anbindungen mit dem Fahrzeugrad und dem Aufbau eines Fahrzeuges verbunden. Am in das Dämpferrohr 1 eintauchenden Ende der Kolbenstange 2 ist ein Arbeitskolben 3, im Ausführungsbeispiel indirekt angebunden, der den Innenraum des Dämpferrohrs 1 in zwei Dämpfungsräume 4, 5 aufteilt. Über Durchtrittskanäle 6, die jeweils einseitig durch Federscheibenpakete 7 federnd abgedeckt sind, kann die Dämpfungsflüssigkeit von einem Dämpfungsraum 4, 5 in den anderen Dämpfungsraum 5, 4 strömen, wobei das jeweilige Federscheibenpaket 7 für eine Dämpfung dieser Strömung sorgt.

Bei Schwingungen zwischen Kolbenstange 2 und Dämpferrohr 1 mit geringer Amplitude ergibt sich das Problem, dass hier nur geringe Dämpfkräfte benötigt werden, um den Fahrkomfort nicht unnötig zu verschlechtern, die Dämpfkraftcharakteristik der verwendeten Hauptventile mit Federscheibenbeplattung eine entsprechende Abstimmung aber nicht ermöglicht, ohne gleichzeitig die Dämpfkraft auch im Bereich großer Anregungsamplituden abzusenken, was die Fahrdynamik und Fahrsicherheit negativ beeinflussen würde. Von daher ist hydraulisch parallel zum Arbeitskolben 3 ein zylindrischer Ausgleichsraum 8 in einer Kolbenstangenverlängerung 9 untergebracht. Der Ausgleichsraum 8 wird mittels eines Trennkolbens 10 in zwei Teilräume 11, 12 getrennt. Diese Teilräume 11, 12 sind jeweils über Durchtrittsöffnungen, vorzugsweise Bohrungen 13, 14, mit jeweils einem Dämpfungsraum 4, 5 hydraulisch verbunden.

Der Trennkolben 10 weist einen Kolbengrundkörper 15 auf, welcher über eine radial außen liegende Gleitmanschette 16 radial an der Zylinderinnenwand des Ausgleichsraums 8 anliegt, wodurch der Trennkolben 10 im Ausgleichsraum 8 axial leicht verschieblich ist.

Der Trennkolben 10 weist weiterhin eine axiale Durchdringung 17 auf, die im nicht zur Erfindung gehörenden Ausführungsbeispiel der Fig. 1 als zentrale Bohrung ausgebildet ist. In diese axiale Durchdringung 17 ist ein Puffer 18 eingesetzt. Der Puffer 18 überragt beide Deckelflächen des Kolbengrundkörpers 15 mit einer zentralen Wölbung 19. In Fig. 1 ist diese zentrale Wölbung 19 beidseitig am Trennkolben 10 vorgesehen und etwa kegelförmig ausgebildet. Des Weiteren ist in Fig. 1 der Puffer mit seinem die axiale Durchdringung 17 durchdringenden Steg und beiden zentralen Wölbungen 19 einteilig in bzw. an den Kolbengrundkörper 15 vulkanisiert oder gespritzt.

Die den unteren Teilraum 12 des Ausgleichsraums 8 mit dem unteren Dämpfungsraum 5 verbindende Bohrung 14 ist als zentrale axiale Bohrung durch die Kolbenstangenverlängerung 9 geführt. Dieses hätte zur Folge, dass bei Anlaufen des Trennkolbens 10 gegen den gemäß Fig. 1 unteren Boden des Ausgleichsraums 8 ein schlagartiges Verschließen der Bohrung 14 erfolgen würde, wodurch Schläge im gesamten System induziert würden, die nicht gewünscht sind und der Anschlagpuffer am Bohrungsrand schnell zerstört würde. Von daher ist die zentrale Bohrung 14 ausgleichsraumseitig mittels einer Trennscheibe 20 abgedeckt. Für die Zuströmung der Dämpfungsflüssigkeit von der Bohrung 14 in den unteren Teilraum 12 des Ausgleichsraums 8 sind am Rand der Trennscheibe 20 mehrere Durchdringungen 21 vorgesehen. Somit ist auch bei der nicht erfindungsgemäßen Konstruktion gemäß Fig. 1 ein weicher Anlauf des Trennkolbens 10 gegen den hier als Trennscheibe 20 ausgebildeten Boden des Ausgleichsraums 8 gewährleistet. Bezüglich des in Fig. 1 oberen Bodens 22 ist das bereits durch die radial nach außen gerichtete Bohrung 13 gewährleistet. Alternativ kann auf die Trennscheibe 20 verzichtet werden, wenn die Bohrung 14 durch den Aufnahmezapfen 23 als Sackloch ausgeführt ist und den unteren Boden nicht durchdringt. Das Sackloch wird dann über einen oder mehrere Zusatzkanäle mit dem Teilraum 12 verbunden. Die Kanalöffnungen liegen dabei radial außen auf dem unteren Boden, sodass der Puffer 18 die Öffnungen nicht versperren kann und nicht vom Öffnungsrand zerstört wird.

Die den Ausgleichsraum 8 aufnehmende Kolbenstangenverlängerung 9 ist in Fig. 1 als Schweißkonstruktion vorgesehen. Sie weist zum Ende hin einen Aufnahmezapfen 23 auf, auf dem mittels einer Schraubverbindung mit einer Mutter 24 der Arbeitskolben 3 befestigt ist.

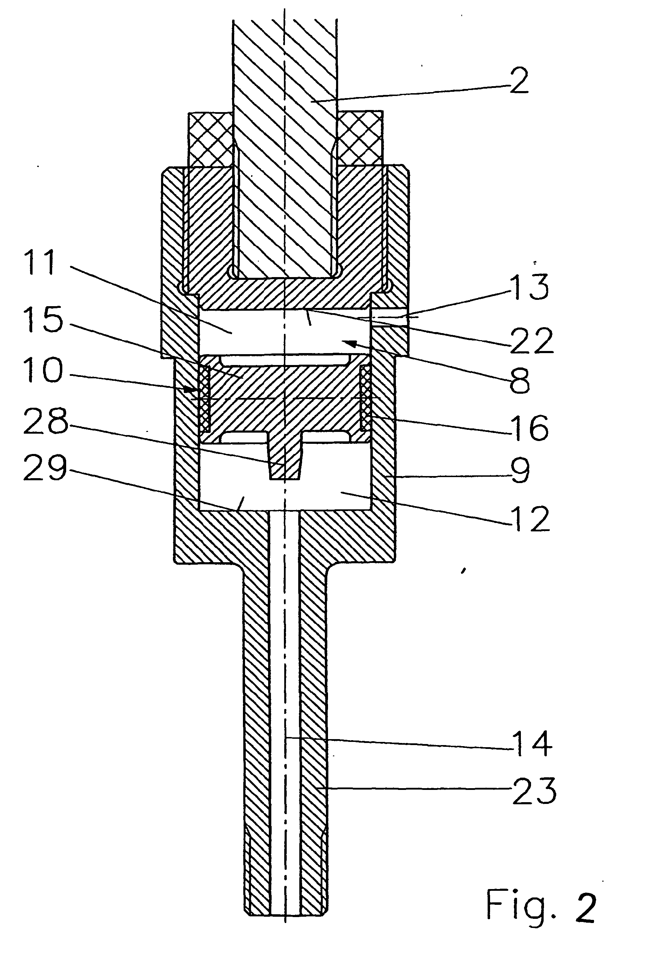

Die Ausbildung der Kolbenstangenverlängerung 9 gemäß der vorliegenden Erfindung gemäß Fig. 2 unterscheidet sich gegenüber der Ausbildung gemäß Fig. 1 dadurch, dass hier keine Schweißkonstruktion, sondern eine Schraubkonstruktion vorgesehen ist. Der wesentliche Unterschied liegt jedoch in der Endlagendämpfung dieser Ausbildung. Entgegen einer mechanischen Dämpfung, wie sie in Fig. 1 gezeigt und beschrieben ist, ist hier zumindest einseitig eine hydraulische Dämpfung vorgesehen. Der Trennkolben 10 weist einseitig einen zentralen Dorn 28 auf, der beim Annähern des Trennkolbens 10 an den unteren Boden 29 in die Öffnung der zentralen Bohrung 14 durch den Aufnahmezapfen 23 fährt. Dadurch wird der hydraulische Durchgang durch diese Bohrung 14 versperrt. Der Dorn 28 kann, wie in Fig. 2 gezeigt ist, zu seinem Ende hin verjüngt ausgebildet sein. Dadurch wird erreicht, dass der Querschnitt der Bohrung 14 mit dem Anfahren des Trennkolbens 10 gegen den Boden 29 langsam sich verstärkend verschlossen wird.

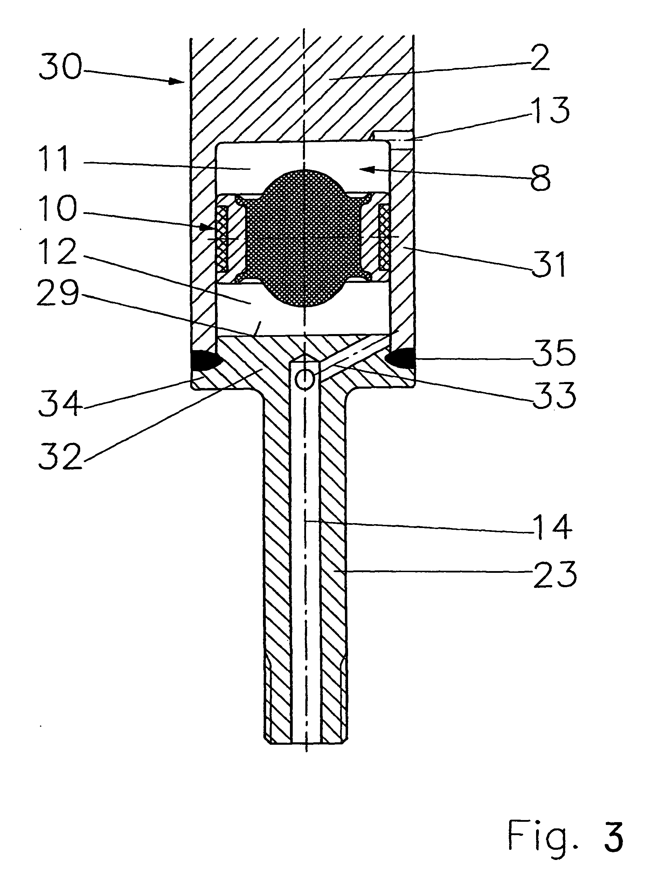

Die in Fig. 3 dargestellte Ausbildung zur Aufnahme des Ausgleichsraums 8 ist besonders wirtschaftlich herstellbar. Bei dieser Ausbildung ist der Ausgleichsraum 8 als Sackloch am Ende der Kolbenstange 2 angebracht. Die Herstellung dieser Sackbohrung kann in üblicher Weise spanabhebend erfolgen. Es ist jedoch auch möglich, dass die Sackbohrung über einen Kaltfließprozess hergestellt wird.

Wichtig ist, dass die Wand 31 am Ende 30 der Kolbenstange 2 einteilig an die Kolbenstange 2 angeformt ist.

Zur hydraulischen Verbindung des oberen Teilraums 11 des Ausgleichsraums 8 mit dem oberen Dämpfungsraum 4 ist, wie auch bei den anderen Versionen, eine Querbohrung 13 vorgesehen.

Zur weiteren Fertigung ist vorgesehen, dass der Aufnahmezapfen 23 beispielsweise auch als Fließpressteil hergestellt wird und, wie in Fig. 1, einen Anschlussflansch 32 aufweist. Die zentrale Bohrung 14 durch den Aufnahmezapfen 23 ist als Sackbohrung ausgebildet, die den Anschlussflansch nicht durchdringt. Querbohrungen 33 laufen schräg durch den Anschlussflansch 32 und münden zum einen in das Sackende der Bohrung 14 und zum zweiten am Rand des Bodens 29 des Ausgleichsraums 8.

Im Ausführungsbeispiel gemäß Fig. 3 ist der Trennkolben 10 gemäß einer nicht zur vorliegenden Erfindung gehörenden Weise ausgebildet.

Die endgültige Montage der Kolbenstange einschließlich der Kolbenstangenverlängerung gemäß Fig. 3 erfolgt in der Form, als in die den Ausgleichsraum 8 bildende Sackbohrung der Trennkolben 10 eingesetzt wird. Danach wird der einen Bund 34 aufweisende Anschlussflansch 32 in das Bohrungsende des Ausgleichsraums 8 eingesetzt. Vorzugsweise bilden die Innenbohrung der den Ausgleichsraum 8 bildenden Wand 31 und der sich an den Bund 34 des Anschlussflansches 32 anschließende Rezess eine Presspassung, sodass bereits zum Ende dieses Montageschrittes eine haftende Verbindung zwischen diesen beiden Teilen hergestellt ist. Danach werden die Wand 31 am Ende 30 der Kolbenstange 2 und der Anschlussflansch 32 des Aufnahmezapfens 23 mittels Schweißen, insbesondere mittels Laserschweißen oder Elektronenstrahlschweißen, miteinander verbunden.

Durch die Gestaltung der Fügestellen als Presspassung wird erreicht, dass möglichst keine Lufteinschlüsse beim anschließenden Schweißen entstehen. Wie in Fig. 3 dargestellt, ist die Schweißtiefe größer als die Dicke der Wand 31. Damit wird sichergestellt, dass auch der Grund der Fügestelle mit aufgeschmolzen wird.

Der Nahtauslauf der Schweißnaht 35 wird mit geringerer Schweißleistung beaufschlagt. Dadurch wird sichergestellt, dass beim Schweißen kein Einstichloch entstehen kann, was zu einer Schwachstelle insbesondere hinsichtlich Biegebelastung führen würde.

Um die Rundlauftoleranz zwischen den beiden durch Schweißen zu verbindenden Teilen zu verbessern, wird die Schweißung in mindestens zwei Umläufen durchgeführt, wobei beim ersten Umlauf eine geringere Schweißleistung vorgesehen wird. Durch diese Maßnahme wird der Wärmeverzug minimiert. Insgesamt wird mit einer hohen Schweißgeschwindigkeit gefahren, damit möglichst wenig Wärmeeintrag in das Bauteil gelangt, wodurch sichergestellt wird, dass der Trennkolben 10 nicht durch Einbringung erhöhter Wärme geschädigt wird.

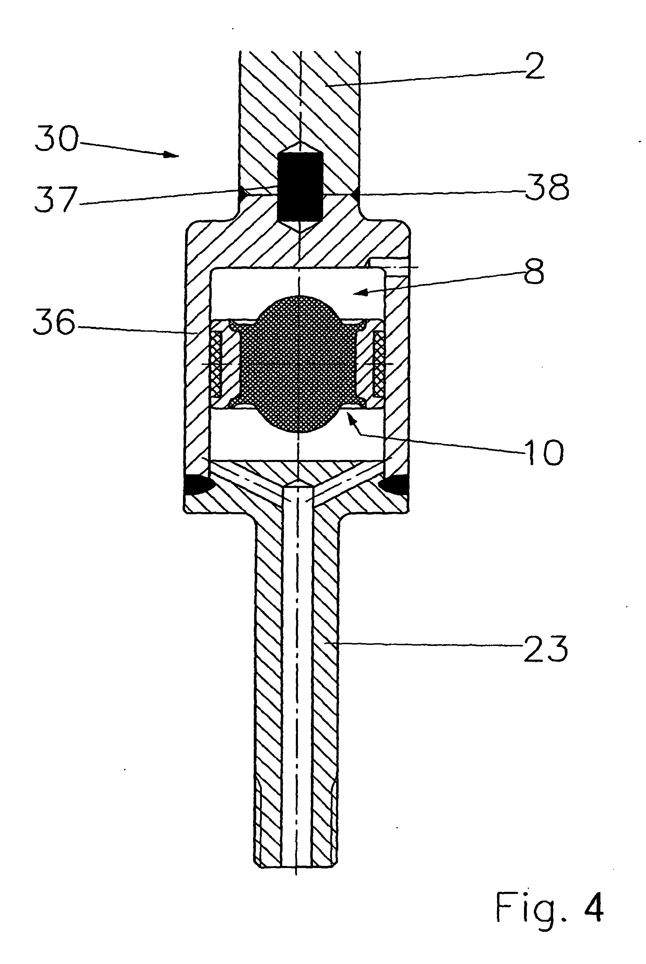

Bei der Ausbildung gemäß Fig. 4, die einen Aufbau ähnlich Fig. 1 zeigt, ist vorgesehen, dass das Ende 30 der Kolbenstange 2 und das sich anschließende Gehäuse 36 für den Ausgleichsraum 8 mittels eines Passstiftes 37 miteinander verbunden werden, bevor diese beiden Teile mittels der in Fig. 4 dargestellten Schweißnaht 38 verbunden werden. Diese Maßnahme hat zum Ziel, dass die durch die Schweißnaht 38 miteinander zu verbindenden Bauteile konzentrisch zueinander geführt sind.

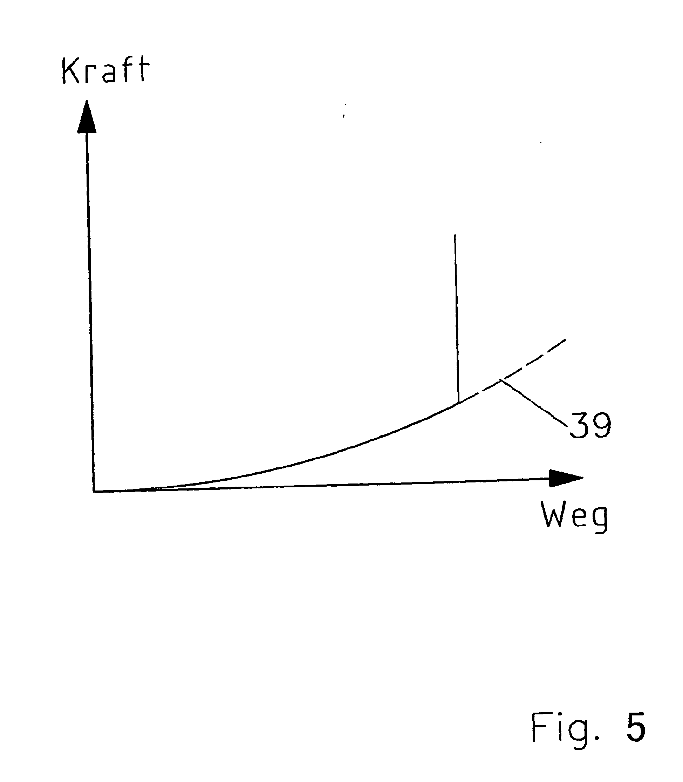

In Fig. 5 ist ein Kraft-Weg-Diagramm dargestellt, das besonders für einen nicht erfindungsgemäßen Trennkolben 10 entsprechend Fig. 5 vorgesehen ist. Diesem Kraft-Weg-Diagramm ist zu entnehmen, dass zum einen ein weicher Anlauf des Trennkolbens 10 gegen den jeweiligen Boden 22, 29 erreicht wird. Bevor jedoch der Puffer 18 so weit verformt ist, dass seine Verformung zu einem stark progressiven Kraftanstieg 39 führt, kommt der Trennkolben 10 mit seinen Deckelflächen gegenüber dem jeweiligen Boden 22, 29 zur Anlage. Dadurch wird erreicht, dass das Kraft-Weg-Verhältnis der Puffer 18 sehr toleranzunempfindlich reagiert.

## Patentansprüche

1. Schwingungsdämpfer mit amplitudenabhängiger Dämpfung, insbesondere eines Fahrzeugrades, mit einer axial verschiebbaren Kolbenstange (2) und einem mit dieser fest verbundenen zylindrischen Ausgleichsraum (8), der durch einen axial verschieblichen Trennkolben (10) aufgeteilt ist, wobei der Ausgleichsraum (8) wenigstens einseitig über eine zentrale Bohrung (14) hydraulisch mit einem der beiden Dämpfungsräume (5) des Schwingungsdämpfers verbunden ist, **dadurch gekennzeichnet, dass** der Trennkolben (10) einseitig einen zentralen Dorn (28) mit einem geringeren oder gleichen Durchmesser als der Durchmesser der zentralen Bohrung (14) aufweist und der Trennkolben (10) an der dem Dorn (28) gegenüber liegenden Deckelfläche (25) einen elastisch nachgiebigen Puffer (18) aufweist, der die Deckelfläche (25) als zentrale Wölbung überragt.

2. Schwingungsdämpfer nach Anspruch 1, **dadurch gekennzeichnet, dass** der Dorn (28) sich zum Ende hin verjüngt.

3. Schwingungsdämpfer nach einem oder mehreren der Ansprüche 1 bis 2, **dadurch gekennzeichnet, dass** der Kolbengrundkörper (15) aus Leichtmetall wie z.B. einer Aluminiumlegierung besteht.

4. Schwingungsdämpfer nach einem oder mehreren der Ansprüche 1 bis 3, **dadurch gekennzeichnet, dass** der Ausgleichsraum (8) als Bohrung in der Kolbenstange ausgebildet ist.

5. Schwingungsdämpfer nach einem oder mehreren der Ansprüche 1 bis 3, **dadurch gekennzeichnet, dass** der zylindrische Ausgleichsraum (8) in einem separaten Gehäuse angeordnet ist, welches am Ende der Kolbenstange angebunden ist.

6. Schwingungsdämpfer nach Anspruch 5, **dadurch gekennzeichnet, dass** das eine Bohrung aufweisende Gehäuse auf einem am Ende der Kolbenstange angeordneten Zapfen oder direkt auf das Ende der Kolbenstange aufgeschoben ist.

7. Stoßdämpfer nach Anspruch 6, **dadurch gekennzeichnet, dass** der Zapfen am Ende der Kolbenstange durch einen in eine Zentrumsbohrung der Kolbenstange eingepressten Passstift gebildet wird.

8. Stoßdämpfer nach Anspruch 6 oder Anspruch 7, **dadurch gekennzeichnet, dass** das Gehäuse nach dem Aufschieben mit dem Zapfen und/oder mit der Kolbenstange und/oder der Passstift mit dem Ende der Kolbenstange verschweißt ist.

9. Stoßdämpfer nach einem oder mehreren der Ansprüche 6 bis 8, **dadurch gekennzeichnet, dass** die Bohrung im Gehäuse gegenüber dem Zapfen oder Pressstift am Ende der Kolbenstange oder gegenüber dem Ende der Kolbenstange ein derartiges Untermaß aufweist, dass eine Pressverbindung zwischen der Bohrung und dem Zapfen, dem Passstift oder der Kolbenstange entsteht.

10. Stoßdämpfer nach Anspruch 8 oder Anspruch 9, **dadurch gekennzeichnet, dass** die Schweißung mittels Laserschweißen erfolgt.

11. Stoßdämpfer nach einem oder mehreren der Ansprüche 8 bis 10, **dadurch gekennzeichnet, dass** das Schweißen umlaufend erfolgt.

12. Stoßdämpfer nach Anspruch 11, **dadurch gekennzeichnet, dass** das Schweißen in zwei Umläufen erfolgt, wobei beim ersten Umlauf nur ein Heftschweißen und beim zweiten Umlauf ein Verbindungsschweißen erfolgt.

13. Schwingungsdämpfer nach Anspruch 12, **dadurch gekennzeichnet, dass** die Schweißleistung beim Verbindungsschweißen am Anfang und/oder am Ende des Umlaufs ansteigt oder abfällt.

14. Schwingungsdämpfer nach einem oder mehreren der Ansprüche 1 bis 13, **dadurch gekennzeichnet, dass** das Gehäuse und/oder die Kolbenstange auf Stahl der Qualität 19 MnB4 besteht.

## Claims

1. Vibration damper having amplitude-dependent damping, in particular of a vehicle wheel, having an axially displaceable piston rod (2) and a cylindrical equalisation chamber (8) which is fixedly connected thereto and is divided by an axially displaceable separating piston (10), wherein the equalisation chamber (8) is hydraulically connected to one of the two damping chambers (5) of the vibration damper at least on one side via a central bore (14), **characterised in that** the separating piston (10) comprises on one side a central mandrel (28) whose diameter is equal to or less than the diameter of the central bore (14) and on the cover surface (25) opposite the mandrel (28) the separating piston (10) has a resiliently flexible buffer (18) which protrudes over the cover surface (25) as a central bulge.

2. Vibration damper as claimed in Claim 1, **characterised in that** the mandrel (28) tapers towards the end.

3. Vibration damper as claimed in any one or several of Claims 1 to 2, **characterised in that** the piston base body (15) consists of light metal such as, for example, an aluminium alloy.

4. Vibration damper as claimed in any one or several of Claims 1 to 3, **characterised in that** the equalisation chamber (8) is formed as a bore in the piston rod.

5. Vibration damper as claimed in any one or several of Claims 1 to 3, **characterised in that** the cylindrical equalisation chamber (8) is disposed in a separate housing which is connected to the end of the piston rod.

6. Vibration damper as claimed in Claim 5, **characterised in that** the housing comprising a bore is slid on a pin disposed on the end of the piston rod or is slid directly onto the end of the piston rod.

7. Shock absorber as claimed in Claim 6, **characterised in that** the pin is formed on the end of the piston rod by an alignment pin press-fitted into a central bore of the piston rod.

8. Shock absorber as claimed in Claim 6 or Claim 7, **characterised in that** after being slid on, the housing is welded to the pin and/or to the piston rod and/or the alignment pin is welded to the end of the piston rod.

9. Shock absorber as claimed in any one or several of Claims 6 to 8, **characterised in that** the bore in the housing is of smaller dimensions than the pin or alignment pin at the end of the piston rod or than the end of the piston rod, such that a press-fitting connection is produced between the bore and the pin, alignment pin or piston rod.

10. Shock absorber as claimed in Claim 8 or Claim 9, **characterised in that** the welding is performed using laser welding.

11. Shock absorber as claimed in any one or several of Claims 8 to 10, **characterised in that** the welding is performed in cycles.

12. Shock absorber as claimed in Claim 11, **characterised in that** the welding is performed in two cycles, wherein in the first cycle only tack welding is performed and in the second cycle joint welding is performed.

13. Vibration damper as claimed in Claim 12, **characterised in that** the welding power in joint welding rises or falls at the start and/or end of the cycle.

14. Vibration damper as claimed in any one or several of Claims 1 to 13, **characterised in that** the housing and/or the piston rod consists of 19 MnB4 quality steel.

## Revendications

1. Amortisseur de vibrations avec amortissement dépendant de l'amplitude, en particulier pour une roue de véhicule automobile, lequel comprend une tige de piston (2) mobile dans la direction axiale, et, reliée fixement à celle-ci, une chambre de compensation (8) cylindrique, qui est divisée par un piston séparateur (10) mobile dans la direction axiale, sachant que la chambre de compensation (8) est reliée hydrauliquement, au moins d'un côté, à l'une des deux chambres d'amortissement (5), au moyen d'un alésage central (14), **caractérisé en ce que** le piston séparateur (10) est doté, d'un côté, d'un mandrin central (28), dont le diamètre est inférieur ou égal au diamètre de l'alésage central (14), et que le piston séparateur (10) présente, sur la surface de la coiffe (25), opposée au mandrin (28), un tampon élastiquement déformable (18), qui est en saillie de la surface de la coiffe (25) sous la forme d'une convexité centrale.

2. Amortisseur de vibrations selon la revendication 1, **caractérisé en ce que** le mandrin (28) s'amincit vers l'extrémité.

3. Amortisseur de vibrations selon l'une ou plusieurs des revendications 1 à 2, **caractérisé en ce que** le corps de base (15) du piston consiste en métal léger, comme, par exemple, un alliage d'aluminium.

4. Amortisseur de vibrations selon l'une ou plusieurs des revendications 1 à 3, **caractérisé en ce que** la chambre de compensation (8) est réalisée sous la forme d'un alésage, qui est pratiqué dans la tige de piston.

5. Amortisseur de vibrations selon l'une ou plusieurs des revendications 1 à 3, **caractérisé en ce que** la chambre de compensation (8) cylindrique est disposée dans un carter séparé, qui est relié à l'extrémité de la tige de piston.

6. Amortisseur de vibrations selon la revendication 5, **caractérisé en ce que** le carter, pourvu d'un alésage, est glissé sur un tenon, qui est situé à l'extrémité de la tige de piston, ou est glissé directement sur l'extrémité de la tige de piston.

7. Amortisseur de vibrations selon la revendication 6, **caractérisé en ce que** le tenon est formé, à l'extrémité de la tige de piston, par une goupille d'assemblage, qui est pressée dans un alésage central de la tige de piston.

8. Amortisseur de vibrations selon la revendication 6 ou 7, **caractérisé en ce que** le carter, après mise en place, avec le tenon, et / ou la tige de piston et / ou la goupille d'assemblage, est soudé avec l'extrémité de la tige de piston.

9. Amortisseur de vibrations selon l'une ou plusieurs des revendications 6 à 8, **caractérisé en ce que** l'alésage, pratiqué dans le carter, présente, par rapport au tenon ou à la goupille d'assemblage, formée à l'extrémité de la tige de piston, ou par rapport à la tige de piston, une dimension réduite, ce dont résulte une liaison serrée entre l'alésage et le tenon, la goupille d'assemblage ou la tige de piston.

10. Amortisseur de vibrations selon la revendication 8 ou la revendication 9, **caractérisé en ce que** le soudage est effectué par soudure au laser.

11. Amortisseur de vibrations selon l'une des revendications 8 à 10, **caractérisé en ce que** la soudure est effectuée à la périphérie.

12. Amortisseur de vibrations selon la revendication 11, **caractérisé en ce que** la soudure est exécutée en deux cycles, sachant que seule une soudure d'épinglage est exécutée au cours du premier cycle et qu'une soudure de liaison est effectuée au cours du deuxième cycle.

13. Amortisseur de vibrations selon la revendication 12, **caractérisé en ce que** la puissance de soudage augmente ou diminue au début et / ou à la fin du cycle, lors de la soudure de liaison.

14. Amortisseur de vibrations selon l'une ou plusieurs des revendications 1 à 13, **caractérisé en ce que** le carter et / ou la tige de piston est / sont en acier de qualité 19 MnB4.
